# EUROPÄISCHE PATENTANMELDUNG

(11) **EP 1 063 448 A2**
(43) Veröffentlichungstag der Anmeldung: **27.12.2000**
(21) Anmeldenummer: 00112458.5
(22) Anmeldetag: 10.06.2000
(51) Int. Cl.: F16G 1/28

(54) **Riemen, insbesondere Förderriemen und Verfahren zur Herstellung desselben**

(30) Priorität: 22.06.1999 DE 19928389
(71) Anmelder: NORDDEUTSCHE SEEKABELWERKE GMBH & CO. KG, 26954 Nordenham (DE)
(72) Erfinder: Basse, Hartwig, 26954 Nordenham (DE)
(74) Vertreter: Möller, Friedrich, Dipl.-Ing.

(57) **Zusammenfassung**

Förderriemen (10) werden entlang einer Förderstrecke der zu fördernden Gegenstände vielfach umgelenkt. Es hat sich gezeigt, daß im Bereich dieser Umlenkung zwischen Führungsmitteln (12) des Förderriemens (10) und Führungsrollen bzw. Führungstrommeln unangenehme Quietschgeräusche entstehen.

Die Erfindung besteht basierend auf der Erkenntnis, daß die Quietschgeräusche von dem verhältnismäßig hohen Reibungswert des Materials des Förderriemens (10) hervorgerufen werden. Deshalb ist erfindungsgemäß vorgesehen, zumindest die Außenseite des Führungsmittels (12) des Förderriemens (10) mit einer Beschichtung (26) aus einem Material mit einem geringeren Reibungswert zu versehen. Es hat sich gezeigt, daß dadurch die nachteiligen Quietschgeräusche wirksam vermieden werden können.

## Beschreibung

Die Erfindung betrifft einen Riemen, insbesondere einen Förderriemen, gemäß dem Oberbegriff des Anspruchs 1 bzw. 3 sowie ein Verfahren zur Herstellung eines Riemens gemäß dem Oberbegriff des Anspruchs 12.

Riemen bestehen üblicherweise ganz oder überwiegend aus einem elastischen Material mit einem verhältnismäßig hohen Reibungswert (Reibungskoeffizient). Der hohe Reibungswert ist erforderlich, um mit einem Riemen möglichst große Antriebskräfte übertragen zu können. Riemen, die zu Förder- oder Transportzwecken eingesetzt werden, nämlich Förderriemen, werden entlang der Förderstrecke durch eine meist größere Anzahl von Rollen oder Trommeln umgelenkt und dabei vielfach in der Förderebene um Kurven geführt. Es hat sich herausgestellt, daß in den Bereichen der Umlenkung eines solchen Riemens störende Geräusche entstehen.

Der Erfindung liegt nun die Aufgabe zugrunde, einen Riemen, insbesondere einen Förderriemen, zu schaffen, der über eine geringere Geräuschentwicklung verfügt.

Ein Riemen zur Lösung dieser Aufgabe weist die Merkmale des Anspruchs 1 auf. Demnach ist der Riemen außenseitig mindestens teilweise mit einem verringerten Reibungswert versehen. Diese Ausgestaltung des erfindungsgemäßen Riemens beruht auf der Erkenntnis, daß der hohe Reibungswert an der Außenseite des Materials herkömmlicher Riemen bei der Umlenkung desselben die verhältnismäßig hohen und oftmals störenden Geräusche verursacht. Es reicht zur Lösung der der Erfindung zugrundeliegenden Aufgabe aus, wenn nur diejenigen äußeren Bereiche des Riemens mit einem verringerten Reibungswert versehen sind, die zur Umlenkung des Riemens mit dazu dienenden Rollen oder Trommeln in Berührung kommen. Der Riemen braucht deshalb nur teilweise mit einem verringerten Reibungswert versehen zu sein.

Bei einem Riemen aus einem lastaufnehmenden Zugmittel und mindestens einem Führungsmittel zum Führen des Förderriemens auf der Transportbahn ist zweckmäßigerweise nur das Führungsmittel wenigstens teilweise außenseitig mit einem verringerten Reibungswert versehen. Dieses reicht aus, um die Geräuschentwicklung des Förderriemens zu verringern, weil die Umlenkung des Förderriemens entlang der Förderstrecke, über das einzige oder gegebenenfalls auch mehrere Führungsmittel des Förderriemens erfolgt und bei dieser Umlenkung die störende Geräuschentwicklung im wesentlichen entsteht. Das Zugmittel des Riemens erfordert dann überhaupt keine Modifikation.

Gemäß einer bevorzugten Ausgestaltung der Erfindung erfolgt eine Verringerung des Reibungswerts durch eine äußere Beschichtung mindestens eines Teils des Riemens mit einem einen geringeren Reibungswert aufweisenden Material. Dieses Material besteht vorzugsweise aus einem entsprechenden thermoplastischen Kunststoff, beispielsweise Polyamid, Polypopylen oder Polytetraflorethylen. Demgegenüber besteht das übrige Material (Kernmaterial) des Riemens - von Verstärkungseinlagen abgesehen - aus einem elastischen Material, und zwar Gummi oder einem Elastomer, insbesondere Polyester-Elastomer oder Polyurethan, das einen höheren Reibungswert hat. Der Reiburigswert des Kernmaterials kann bis zum Doppelten des Reibungswerts des Materials der Beschichtung betragen, insbesondere ist er um 20 bis 50% höher.

Die Beschichtung erfolgt vorzugsweise durch ein außen auf mindestens einen Teil des Kernmaterials des Riemens aufgebrachtes Kunststoffgewebe. Eine solche Beschichtung läßt sich einfach aufbringen und gewährleistet eine dauerhafte Verbindung mit dem Kernmaterial des Riemens. Es ist aber auch denkbar, die Beschichtung aus Kunststoffmaterial mit einem geringen Reibungswert auf das Kernmaterial mit einem höheren Reibungswert aufzuspritzen, aufzuflocken oder aufzuextrudieren.

Gemäß einer Weiterbildung des Riemens ist vorgesehen, dass mindestens die Führungsflächen des Führungsmittels profiliert sind. Diese Profilierung kann durch Nuten und/oder Vorsprünge beliebigen Querschnitts erfolgen. Es aber auch denkbar, eine netzartige Profilierung aus sich insbesondere kreuzenden Strängen vorzusehen. Durch die Profilierung mindestens der Führungsflächen des Führungsmittels wird eine Verringerung der Anlageflächen an den zur Umlenkung des Riemens dienenden Rollen, Trommeln oder dergleichen erreicht. In Verbindung mit der einen geringeren Reibungswert aufweisenden Beschichtung, die sich insbesondere auch über die Bereiche der Vorsprünge, Nuten und/oder Stränge erstreckt, wird auf diese Weise eine besonders wirksame Reduzierung störender Geräusche erzielt.

Ein Verfahren zur Lösung der eingangs genannten Aufgabe weist die Maßnahmen des Anspruchs 12 auf. Demnach wird in ein Formorgan zur Bildung mindestens eines Teils des Riemens, insbesondere des Führungsmittels, zunächst die Beschichtung eingebracht und dann das übrige Material für den Riemen, insbesondere das Kernmaterial. Zumindest das Kernmaterial wird in einem erweichten Zustand in das Formorgan eingebracht, so daß bei der nachfolgenden Formgebung des Riemens mit dem Material der Beschichtung, sich das aufgeschmolzene Kernmaterial dauerhaft verbindet. Auf diese Weise erfordert die Beschichtung des Riemens nahezu keinen Mehraufwand. Dieser Mehraufwand ist dann besonders gering, wenn das Material für die Beschichtung im kalten Zustand dem Formorgan zugeführt wird. Denkbar ist es aber durchaus, auch das Material der Beschichtung zu erwärmen.

Gemäß einer bevorzugten Weiterbildung des Verfahrens wird das vorzugsweise kalte bzw. nicht fließfähige Beschichtungsmaterial in eine der Gestalt des Riemens oder eines Teils desselben entsprechende Vertiefung des Formorgans eingebracht und hierin vorgeformt, bevor das erwärmte Kernmaterial zur Bildung des übrigen Teils des Riemens bzw. Führungsmittels dem Formorgan zugeführt wird. Durch ein Andrücken an mindestens einen Teil der Wandung der Vertiefung im Formorgan wird sichergestellt, daß die Beschichtung an der vorgesehenen Stelle des späteren Riemens oder eines Teils desselben sich befindet, und zwar insbesondere an den vorgesehenen Bereichen der Außenseite des Riemens.

Bevorzugte Ausführungsbeispiele der Erfindung werden nachfolgend anhand der Zeichnung näher erläutert. In dieser zeigen:
- Fig. 1: eine Seitenansicht eines Teils eines Riemens,
- Fig. 2: einen Querschnitt II-II durch den Riemen der Fig. 1,

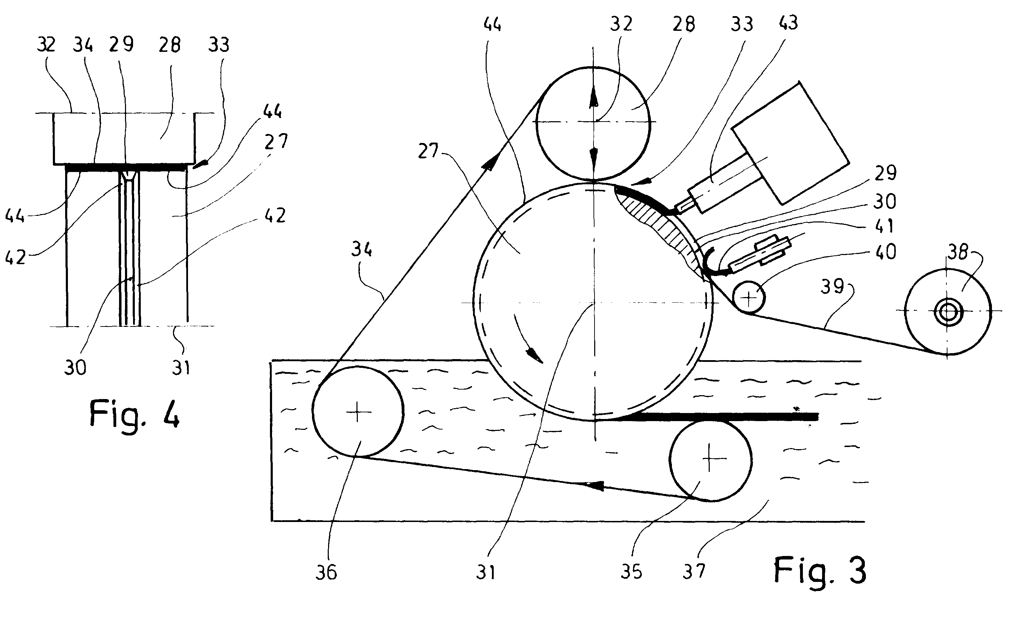

- Fig. 3: eine Vorrichtung zur Herstellung eines Teils des Riemens in einer Seitenansicht,
- Fig. 4: eine Ansicht in dem Bereich zwischen zwei Formwalzen zur Herstellung des Teils des Riemens,
- Fig. 5: einen Querschnitt durch den von der Formvorrichtung der Fig. 3 und 4 hergestellten Teil des Riemens in einer Vorfertigungsstufe,
- Fig. 6: einen Querschnitt durch den fertiggestellten Teil des Riemens,
- Fig. 7: einen vergrößert dargestellten, alternativ ausgebildeten Teil des Riemens in einem Querschnitt analog zur Fig. 6, und
- Fig. 8: einen Teil des Riemens in einer Darstellung gemäß Fig. 7 in einer anderen alternativen Ausgestaltung.

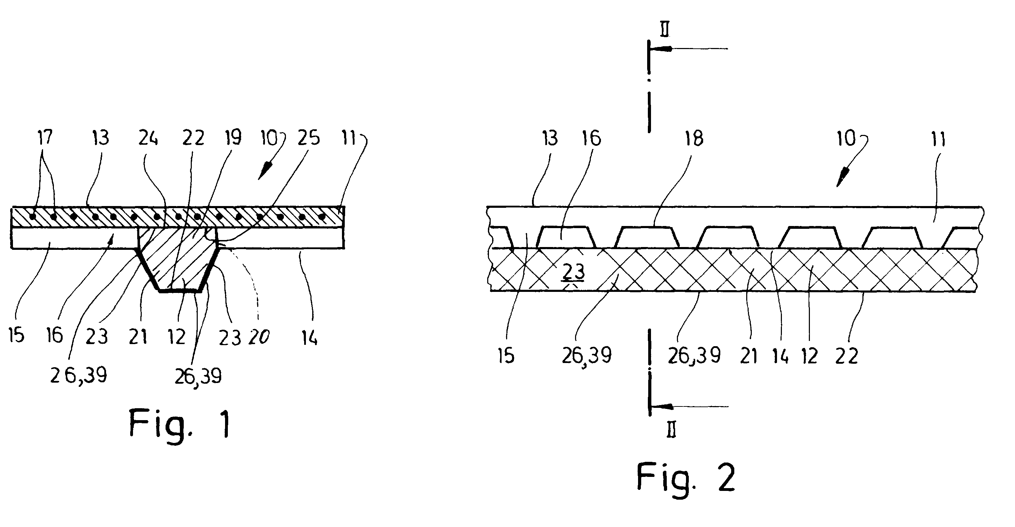

Die Figuren, und zwar insbesondere die Fig. 1 und 2, zeigen einen Riemen, bei dem es sich um einen Förderriemen 10 handelt. Der hier gezeigte Förderriemen 10 setzt sich zusammen aus einem Zugmittel 11 und einem Führungsmittel 12. Das Zugmittel 11 dient im wesentlichen zur Übertragung der Antriebskräfte des Förderriemens 10. Auf einer glatten Oberseite 13 des Zugmittels 11 können die zu fördernden Gegenstände unmittelbar aufliegen. In der Regel ist der Förderriemen 10 aber unter separaten Tragmitteln zur Aufnahme der zu fördernden Gegenstände angeordnet. Dies kann derart geschehen, daß der Förderriemen 10 mit der Oberseite 13 des Zugmittels 11 reibschlüssig unter den vorzugsweise plattenförmigen Tragmitteln, die in den Figuren nicht gezeigt sind, anliegt oder kraftschlüssig, zum Beispiel durch Schrauben oder Nieten, mit den Tragmitteln für die zu fördernden Gegenstände verbunden ist.

Das Zugmittel 11 ist an der Unterseite 14 zahnriemenartig profiliert. Im gezeigten Ausführungsbeispiel kommt die Profilierung durch abwechselnd aufeinanderfolgende (trapezförmige) Erhöhungen 15 und Vertiefungen 16 zustande. Die aufeinanderfolgenden Erhöhungen 15 und Vertiefungen 16 sind gleichermaßen ausgebildet. Insbesondere verfügen die Erhöhungen 15 über gleichmäßige Abstände. Die Erhöhungen 15 bilden praktisch Zähne zum formschlüssigen Antrieb des Förderriemens 10 durch mindestens ein zahnradartig ausgebildetes Antriebsrad.

Eine Mantelfläche eines solchen Antriebrads ist korrespondierend zu den Erhöhungen 15 und den Vertiefungen 16 des Förderriemens 10 ausgebildet. Durch die geschilderte Gestaltung der Unterseite 14 des Zugmittels 11 handelt es sich hierbei praktisch um einen Zahnriemen.

Das hier gezeigte Zugmittel 11 ist mit mehreren in Längsrichtung des Förderriemens 10 verlaufende Zugstränge 17 versehen. Die in etwa gleichem Abstand zueinander im Zugmittel 11 eingebetteten Zugstränge 17 befinden sich in demjenigen Bereich des Zugmittels 11, der oberhalb der Vertiefungen 16 liegt, und zwar etwa mittig zwischen Bodenflächen 18 der Vertiefungen 16 der Oberseite 13 des Zugmittels 11.

Der hier gezeigte Förderriemen 10 verfügt über ein einziges Führungsmittel 12, das in Längsrichtung des Förderriemens 10 verläuft und etwa mittig unter dem Zugmittel 11 angeordnet ist. Das Führungsmittel 12 verfügt über einen rechteckförmigen Fußabschnitt 19, der in seiner Höhe den durch die Erhöhungen 15 gebildeten Zähnen des Zugmittels 11 entspricht und in einer korrespondierenden mittigen Längsnut 20 des Zugmittels 11 angeordnet ist. Die Längsnut 20 geht aus von der Unterseite 14 des Zugmittels 11 und endet in der Ebene der Bodenflächen 18 der Vertiefungen 16. Gegenüber der Unterseite 14 des Zugmittels 11 steht das Führungsmittel 12 mit einem trapezförmigen Führungsabschnitt 21 vor. Die Höhe des Führungsabschnitts 21 entspricht etwa der Dicke des Zugmittels 11. Der trapezförmige Führungsabschnitt 21 verjüngt sich zu einer freien Endfläche 22 hin, die mit parallelem Abstand zur Unterseite 14 des Zugmittels 11 verläuft. Gegenüberliegende Führungsflächen 23 des Führungsabschnitts 21 des Führungsmittels 12 verlaufen dadurch schräg zur Vertikalen, und zwar unter einem spitzen Winkel. Die Winkel beider gegenüberliegender Führungsflächen 23 zur Vertikalen sind gleich groß. Die gegenüberliegenden Führungsflächen 23 sind entgegengesetzt geneigt, so daß sie zur horizontalen Führungsfläche 23 hin konvergieren.

Der Fußabschnitt 19 und der Führungsabschnitt 21 des Führungsmittels 12 sind einstückig ausgebildet. Das formschlüssig in der Längsnut 21 angeordnete Führungsmittel 12 ist mit einer horizontalen Oberseite 24 des Fußabschnitts 19 mit einer Grundfläche 25 der Längsnut 20 im Zugmittel 11 verbunden, und zwar durch Kleben, Schweißen, Vulkanisieren oder dergleichen. Diese Verbindung erfolgt derart, daß das Zugmittel 11 und das Führungsmittel 12 zur Bildung des Förderriemens 10 einstückig und dauerhaft miteinander vereint sind.

Das Zugmittel 11 und das Führungsmittel 12 sind im wesentlichen aus einem flexiblen Material mit einem hohen Reibbeiwert (Reibungskoeffizient) gebildet, und zwar aus einem Gummi oder einem Elastomer, insbesondere einem Polyester-Elastomer oder Polyurethan. Die Zugstränge 17 im Zugmittel sind in an sich bekannter Weise aus einem hochzugfesten Material, beispielsweise einem Seil aus hochzugfesten Fasern oder metallischen Drähten, gebildet.

Erfindungsgemäß weist ein Teil der Außenseite des Förderriemens 10 einen verringerten Reibungswert auf. Zu diesem Zweck sind einige Flächen des Förderriemens 10 mit einer Beschichtung aus einem Material mit einem geringeren Reibungswert versehen.

Im gezeigten Ausführungsbeispiel verfügt ein Teil des Führungsmittels 12 über eine Außenfläche mit einem geringeren Reibungsbeiwert. Es sind dieses diejenigen Flächen des Führungsmittels 12, die mit den in den Figuren nicht gezeigten Umlenktrommeln oder Umlenkrädern des Förderers in Kontakt kommen. Dabei handelt es sich bei dem in den Fig. 1 und 2 gezeigten Förderriemen 10 um die horizontale Endfläche 22 und die gegenüberliegenden schrägen Führungsflächen 23 des Führungsabschnitts 21 des Führungsmittels 12. Gegebenenfalls reicht es aus, wenn nur die gegenüberliegenden schrägen Führungsflächen 23 außenseitig einen geringeren oder verringerten Reibungswert aufweisen, also beschichtet sind.

Die Verringerung des Reibungswerts der Außenseiten des Führungsmittels 12, das heißt, mindestens der gegenüberliegenden, schrägen Führungsflächen 23, vorzugsweise auch der Endfläche 22 zwischen den Führungsflächen 23, erfolgt durch eine Beschichtung der entsprechenden Außenseiten des einen höheren Reibungswert aufweisenden Kernmaterials (beispielsweise Polyurethan) des Führungsmittels 12. Diese Beschichtung wird vorzugsweise aus einem Kunststoffgewebe mit einem gegenüber dem übrigen Material des Förderriemens 10, insbesondere dem Kernmaterial des Führungsmittels 12, verringerten Reibungswert gebildet. Vorzugsweise handelt es sich hierbei um ein Polyamidgewebe 39. Die Beschichtung 26, das heißt das Polyamidgewebe 39, ist mit dem Kernmaterial des Führungsmittels 12 fest verbunden. Dies geschieht vorzugsweise während der Herstellung des Führungsmittels 12.

Es ist auch denkbar, die Beschichtung 26 zu bilden durch ein Aufspritzen oder Aufflocken des entsprechenden Materials mit einem geringeren Reibungsbeiwert auf das Kernmaterial des Führungsmittels 12. Eventuell kann das Kernmaterial des Führungsmittels 12 an den schrägen Führungsflächen 23 und gegebenenfalls der Endfläche 22 auch mit einem Klebeband beklebt sein, dessen Außenfläche einen verringerten Reibungswert aufweist.

Abweichend vom gezeigten Ausführungsbeispiel kann das Führungsmittel 12 auch an einem anders gestalteten Zugmittel, beispielsweise einem Flachriemen, angeordnet sein. Ebenso ist es denkbar, daß der Förderriemen mehrere, vorzugsweise parallele Führungsmittel 12 aufweist. Schließlich können die Führungsmittel 12 andere Querschnitte aufweisen. Insbesondere muß der Führungsabschnitt 21 des Führungsmittels 12 nicht trapezförmig ausgebildet sein. Er kann auch einen dreieckförmigen Querschnitt oder einen Halbrundquerschnitt aufweisen. Schließlich kann bei Riemen, die nur ein Zugmittel aufweisen, also über kein Führungsmittel 12 verfügen, das Zugmittel selbst an Teilen seiner Außenseite einen verringerten Reibwert aufweisen, indem ein Teil des Zugmittels mit einem entsprechenden Material beschichtet ist.

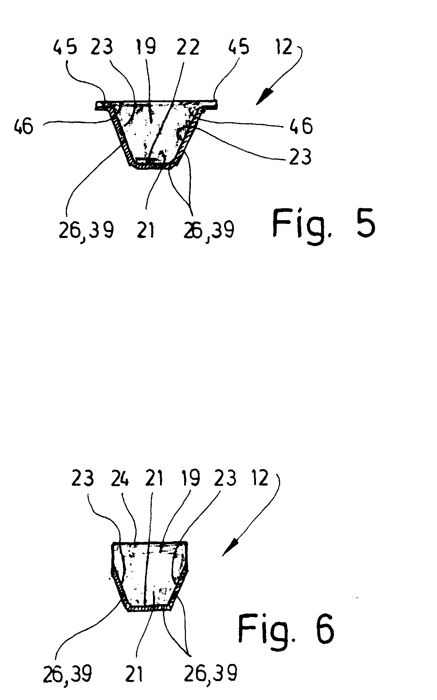

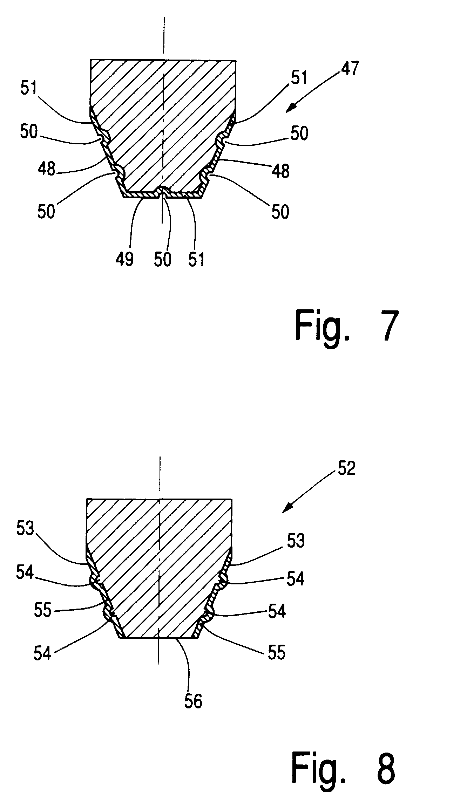

Die Fig. 7 zeigt ein alternatives Ausführungsbeispiel eines Führungsmittels 47, und zwar in einem gegenüber der Darstellung des Führungsmittels 12 in der Fig. 6 vergrößerten Querschnitt.

Das Führungsmittel 47 verfügt in beiden gegenüberliegenden, schrägen Führungsflächen 48 und in der Endfläche 49 über eine Profilierung. Im gezeigten Ausführungsbeispiel ist die Profilierung gebildet durch zwei Nuten 50 in jeder Führungsfläche 48 und eine mittige Nut in der Endfläche 49. Die Nuten 50 sind gleichermaßen ausgebildet, verfügen nämlich über einen etwa halbkreisförmigen Querschnitt. Die Nuten 50 verlaufen geradlinig in Längsrichtung des Führungsmittels 47. Das Führungsmittel 47 verfügt auf den Führungsflächen 48 und der Endfläche 49 über eine durchgehende Beschichtung 51, die wie die Beschichtung 26 des Führungsmittels 12 des vorstehend beschriebenen Ausführungsbeispiels ausgebildet ist. Die Beschichtung 51 erstreckt sich durchgehend auch über die Bereiche der Nuten 50.

Die Nuten 50 können auch andere Querschnitte aufweisen als im Ausführungsbeispiel der Fig. 7 gezeigt. Beispielsweise können sie trapezförmig oder dreieckförmig sein. Ebenso ist es denkbar, dass die Anzahl der Nuten in den Führungsflächenflächen 48 vom gezeigten Ausführungsbeispiel abweicht. Die Endfläche 49 braucht keine Nut aufzuweisen. Auch kann die Beschichtung 51 an der Endfläche 49 fehlen. Des weiteren ist es denkbar, dass die Beschichtung 51 sich nicht über die Bereiche der Nuten 50 erstreckt und die Nuten 50 schräg zur Längsrichtung der Führungsflächen 48 verlaufen. Gegebenenfalls können die Nuten 50 auch quer zur Längsrichtung der Führungsflächen 49 verlaufend angeordnet sein.

Die Fig. 8 zeigt ein weiteres Ausführungsbeispiel eines Führungsmittels 52. Das Führungsmittel 52 weist auf den Führungsflächen 53 Vorsprünge 54 auf. Die Vorsprünge 54 verfügen über einen teilkreisförmigen, insbesondere halbkreisförmigen, Querschnitt. Jeder Führungsfläche 53 sind zwei Vorsprünge 54 zugeordnet, die in Längsrichtung des Führungsmittels 52 durchgehend verlaufen. Es ist auch denkbar, jede Führungsfläche 53 mit einer kleineren oder größeren Anzahl von Vorsprüngen 54 zu versehen. Die gesamten Führungsflächen 53, und zwar auch die Vorsprünge 54, sind mit einer Beschichtung 55 versehen, die der Beschichtung 26 des ersten Ausführungsbeispiels entspricht. Eine Endfläche 56 des Führungsmittels 52 weist keine Beschichtung und auch keine Vorsprünge 54 auf. Es ist aber denkbar, auch hier eine Beschichtung 55 und ggf. Vorsprünge 54 oder auch Nuten vorzusehen. Ebenso ist es denkbar, dass die Vorsprünge 54 schräg zur Längsrichtung der Führungsflächen 53 oder quer hierzu verlaufen.

Ein weiteres, in den Figuren nicht gezeigtes Führungsmittel kann mindestens auf den Führungsflächen mit einer netzartigen Strukturierung versehen sein. Es befinden sich auf den Führungsflächen dann sich kreuzende Stränge, die vorzugsweise längs und quer zu den Führungsflächen verlaufen. Die Querschnitte der Stränge können wie auch die Querschnitte der Vosprünge 54 und der Nuten 50 beliebig sein. Ebenso ist es denkbar, die Stränge mit einer Beschichtung zu versehen.

Die Herstellung des Förderriemens 10 erfolgt vorzugsweise in zwei separaten Prozessen, in dem das Zugmittel 11 und das Führungsmittel 12 zunächst einzeln, das heißt voneinander getrennt, hergestellt und anschließend durch Kleben, Vulkanisieren, Schweißen oder dergleichen dauerhaft verbunden werden.

Die Herstellung des Zugmittels 11 kann in an sich bekannter Weise erfolgen, und zwar vorzugsweise derart, wie es für Keilriemen üblich und bekannt ist. Lediglich ist in besonderer Weise das Zugmittel 11 bei der Herstellung mit der Längsnut 20 zu versehen. Die Längsnut 20 kann aber auch nachträglich in das Zugmittel 11 eingebracht werden, und zwar beispielsweise durch Fräsen.

In erfindungsgemäß besonderer Weise wird das teilweise mit einem einen geringen Reibungswert aufweisenden Material beschichtete Führungsmittel 12 hergestellt. Bei diesem Material handelt es sich vorzugsweise um einen thermoplastischen Kunststoff, wie zum Beispiel Polyamid, Polypopylen oder Polytetraflorethylen.

Die Herstellung des Führungsmittels 12 erfolgt zwischen zwei Formrädern 27 und 28. Das im Durchmesser größere, zylindrische Formrad 27 ist mit einer umlaufenden Keilrille 29 versehen, deren Querschnitt mindestens dem Querschnitt des Führungsmittels 12 entspricht. Im gezeigten Ausführungsbeispiel ist die gesamte Keilrille 29 trapezförmig ausgebildet, wobei deren Tiefe der Gesamthöhe des Führungsmittels 12 entspricht, vorzugsweise etwas größer ist. Eine horizontale Ringfläche 30 im Grund der Keilrille 29 entspricht etwas der Breite der Endfläche 22 des Führungsabschnitts 21 des Führungsmittels 12. Das im Durchmesser kleinere Formrad 28 ist mit einem glatten Zylindermantel versehen. Die Formräder 27 und 28 liegen sich mit parallelen Drehachsen 31 und 32 gegenüber, und zwar derart, daß zwischen den beiden Formrädern 27 und 28 ein Formspalt 33 entsteht.

Um einen Teil des Umfangs beider Formräder 27 und 28 ist ein endloses Spannband 34 geführt. Das Spannband 34 wird oben dem über dem größeren Formrad 27 liegenden kleineren Formrad 28 zugeführt. Das Spannband 34 läuft dann über mehr als den halben Umfang des kleinen Formrades 28 zum Formspalt 33, von wo es vom Formrad 28 abgelenkt und auf das größere Formrad 27 geführt wird. Das Spannband 34 läuft dann etwa über den halben Umfang des Formrades 27 und wird an der Unterseite desselben abgelenkt zu einer Umlenktrommel 35, von der das Spannband 34 zu einer weiteren Umlenktrommel 36 geführt wird. Von dieser Umlenktrommel 36 läuft das Spannband wieder zur Oberseite des kleinen Formrades 28.

In einem unteren Teilbereich des großen Formrades 27 ist eine Kühlstrecke vorgesehen. Vorzugsweise handelt es sich dabei um ein Wasserbad 37, in das ein unterer Teil des großen Formrades 27 eintaucht. Auch die Umlenktrommeln 35 und 36 sind im Wasserbad 37 angeordnet.

Bei der Herstellung des Führungsmittels 12 wird nun so vorgegangen, daß von einer Vorratsrolle 38, auf der ein Materialstreifen des zur Beschichtung 26 dienenden Polyamidgewebes 39 aufgerollt ist, das Polyamidgewebe 39 über eine Umlenkrolle 40 zur vom Spannband 34 freigelassenen Seite des großen Formrades 27 geführt und dort in die Keilrille 29 durch einen Niederhalter 41 eingeführt wird. Der Niederhalter 41 ist so ausgebildet, daß er das Polyamidgewebe 39, dessen Breite so gewählt ist, daß es mindestens die gesamte Fläche der Keilrille 29 bedeckt, so in die Keilrille 29 eingelegt wird, daß das Polyamidgewebe 39 an die Ringfläche 30 und an gegenüberliegenden Seiten derselben sich befindenden schrägen Keilflächen 42 anliegt. Nachdem das Polyamidgewebe 39 in die Keilrille 29 eingelegt und dort vom Niederhalter 41 eingedrückt worden ist, wird aus einem Spritzkopf 43 mit einem Runddüsenvorsatz das Kernmaterial zur Bildung des Führungsmittels 12, nämlich vorzugsweise Polyurethan, im durch Erhitzen fließfähig gemachten Zustand eingespritzt, und zwar in einer ausreichenden Menge, um die Keilrille 29 des Formrads 27 auszufüllen.

Durch die sich gleichermaßen drehenden Formräder 27 und 28 und eine umlaufende Fortbewegung des Spannbands 34 werden das Polyamidgewebe 39 und das fließfähige Kernmaterial für das Führungsmittel 12 weiterbewegt in den Formspalt 33. Dort wird das Material vom kleinen Formrad 28 in die Keilrille 29 gedrückt, wobei überschüssiges Material auf die zylindrische Mantelfläche 44 des Formrads 27 gelangt. Nach Verlassen des Formspalts 33 wird die Mantelfläche 44 des Formrads 27 vom Spannband 34 überdeckt. So gelangen das Polyamidgewebe 39 und das Kernmaterial für das Führungsmittel 12 noch eingeschlossen zwischen dem Spannband 34 und dem Formrad 27 in das Wasserbad 37. Dabei erfolgt eine Abkühlung insbesondere des Kernmaterials zur Bildung des Führungsmittels 12. Nach ausreichender Abkühlung wird das Spannband 34 vom Formrad 27 abgelenkt, wodurch das fertiggestellte Führungsmittel 12 aus der Keilrille 29 des Formrads 27 herausgeführt werden kann. Bei der Bildung des Führungsmittels 12 in der Keilrille 29 des Formrades 27 kann die strukturierte Außenseite des Polyamidgewebes 39 zur Bildung der Beschichtung 26 geglättet werden, was zur weiteren Reduzierung des Reibungswerts vor allem an der Außenseite der Beschichtung 26 beiträgt.

Nach dem Verlassen der Keilrille 29 im Wasserbad 37 hat das Führungsmittel 12 noch nicht seine endgültige Gestalt erlangt. Vielmehr steht an einer breiten Oberseite des Führungsmittels 12 auf jeder Seite ein schmaler Reststreifen 45 aus dem Kernmaterial und dem Polyamidgewebe 39 über (Fig. 5). Durch ein anschließendes Besäumen gegenüberliegender Ränder des Führungsmittels 12 werden die Reststreifen 45 und gegenüberliegende Eckbereiche 46 abgeschnitten, und zwar senkrecht zur Oberseite 24 des Führungsmittels 12, wodurch der unbeschichtete, rechteckförmige Fußabschnitt 19 des Führungsmittels 12 entsteht (Fig. 6).

Das auf vorstehend beschriebene Weise gebildete Führungsmittel 12 weist eine innige Verbindung zwischen dem aus Polyurethan gebildeten Kernmaterial und dem Polyamidgewebe 39 auf, indem das auf das Polyamidgewebe 39 aufgetragene erwärmte und fließfähige Kernmaterial eine dauerhafte Verbindung mit dem Polyamidgewebe 39 eingeht. Es entsteht so eine dauerhafte Beschichtung der gegenüberliegenden schrägen Führungsflächen 23 und der diese verbindenden (schmalen) Endflächen 22 des trapezförmigen Fußabschnitts 19 des Führungsmittels 12.

Das auf vorstehend beschriebene Weise hergestellte Führungsmittel 12 wird anschließend mit dem separat hergestellten Zugmittel 11 verbunden. Dies kann so geschehen, daß die Herstellungsprozesse für das Zugmittel 11 und das Führungsmittel 12 benachbart und synchron ablaufen, wodurch sofort nach der Herstellung des Zugmittels 11 und des Führungsmittels 12 eine Verbindung derselben erfolgt, indem sie zusammengeführt und dauerhaft miteinander vereinigt werden durch Schweißen, Kleben und/oder Vulkanisieren.

## Patentansprüche

1. Riemen, insbesondere Förderriemen (10), der mindestens teilweise aus einem Material mit vorzugsweise großem Reibungswert gebildet ist, **dadurch gekennzeichnet**, daß außenseitig mindestens teilweise der Reibungswert verringert ist.

2. Riemen nach Anspruch 1, **dadurch gekennzeichnet**, daß der verringerte Reibungswert mindestens in denjenigen Bereichen, in denen der Förderriemen (10) in Kontakt mit Umlenkungen, wie zum Beispiel Rollen oder Trommeln, kommt, vorgesehen ist.

3. Riemen, insbesondere Förderriemen (10), mit einem Zugmittel (11) und wenigstens einem damit verbundenen Führungsmittel (12), insbesondere nach Anspruch 1 oder 2, **dadurch gekennzeichnet**, daß das oder jedes Führungsmittel (12) mindestens teilweise mit einem Material mit einem gegenüber dem übrigen Material (Kernmaterial) verringerten Reibungswert versehen ist, wobei vorzugsweise das Führungsmittel (12) als ein Führungskeil mit einem mindestens teilweise trapezförmigen Querschnitt ausgebildet ist.

4. Riemen nach einem der vorhergehenden Ansprüche, **dadurch gekennzeichnet**, daß die Verringerung des Reibungswerts mit einer äußeren Beschichtung (26) aus einem Material mit einem geringeren Reibungswert erfolgt, wobei vorzugsweise der Reibungswert der Beschichtung (26) mindestens um 25%, vorzugsweise um mehr als 50%, kleiner als der Reibungswert des zu beschichtenden Kernmaterials insbesondere des oder jedes Führungsmittels (12) ist.

5. Riemen nach einem der vorhergehenden Ansprüche, **dadurch gekennzeichnet**, daß die Beschichtung (26) sich mindestens über denjenigen Bereich des Führungsmittels (12) erstreckt, der zur Anlage an Umlenkmitteln, insbesondere Umlenkrädern und/oder Antriebsrädern des Förderriemens (10), kommt.

6. Riemen nach einem der vorhergehenden Ansprüche, **dadurch gekennzeichnet**, daß mit Ausnahme desjenigen Bereichs, mit dem das oder jedes Führungsmittel (12) mit dem Zugmittel (11) verbunden ist, im wesentlichen die übrigen Außenflächen des Führungsmittels (12) beschichtet sind.

7. Riemen nach einem der vorhergehenden Ansprüche, **dadurch gekennzeichnet**, daß mindestens gegenüberliegende, schräggerichtete Führungsflächen (23) eines Führungsabschnitts (21) des trapezförmigen Führungsmittels (12) mit der Beschichtung (26) versehen sind, vorzugsweise auch eine die schräggerichteten Führungsflächen (23) verbindende quergerichtete Endfläche (22) einer kürzeren Unterseite des Führungsmittels (12).

8. Riemen nach einem der vorhergehenden Ansprüche, **dadurch gekennzeichnet**, daß die Beschichtung (26) als eine Kunststoffgewebebeschichtung (39) ausgebildet ist, die vorzugsweise mit dem Kernmaterial mindestens des Führungsmittels (12) verbunden ist, wobei gegebenenfalls freiliegende Außenseiten der Kunststoffgewebebeschichtung (39) geglättet sind.

9. Riemen nach einem der vorhergehenden Ansprüche, **dadurch gekennzeichnet**, daß die Beschichtung (26) aus einem thermoplastischen Kunststoff mit geringerem Reibungswert und das Kernmaterial aus einem Gummi, Elastomer oder thermoplastischen Kunststoff, insbesondere Polyurethan, mit größerem Reibungswert gebildet ist, wobei die Beschichtung (26) aus einem Polyamid, Polypopylen oder Polytetraflorethylen, insbesondere einem Gewebe der genannten Materialien gebildet ist.

10. Riemen nach einem der vorhergehenden Ansprüche, **dadurch gekennzeichnet**, dass mindestens Führungsflächen (23) des Führungsmittels (12) profiliert sind, vorzugsweise Nuten und/oder Vorsprünge aufweisen und/oder netzartig profiliert sind, insbesondere durch sich kreuzende Stränge.

11. Riemen nach einem der vorhergehenden Ansprüche, **dadurch gekennzeichnet**, dass die Beschichtung (26) auch in Bereichen der Vorsprünge, Vertiefungen und/oder Stränge angeordnet ist, diese vorzugsweise überdeckt.

12. Verfahren zur Herstellung eines Riemens, insbesondere eines Förderriemens (10), wobei mindestens ein Teil des Riemens, insbesondere ein Führungsmittel (12), aus einem erweichten Materialstrang, der zwischen korrespondierenden, umlaufenden Formorganen geformt wird, gebildet wird, **dadurch gekennzeichnet**, daß mindestens einem Formorgan zunächst das Material zur Bildung der Beschichtung (26) und anschließend das plastifizierte bzw. erweichte Kernmaterial zur Bildung des Führungsmittels (12) zugeführt wird.

13. Verfahren nach Anspruch 12, **dadurch gekennzeichnet**, daß das erweichte Kernmaterial des Förderriemens (10), insbesondere des Führungsmittels (12) auf das zur Bildung der Beschichtung (26) dienende Material in erweichtem Zustand aufgebracht wird.

14. Verfahren nach einem der vorhergehenden Ansprüche, **dadurch gekennzeichnet**, daß das zur Bildung der Beschichtung (26) dienende Material in einem Formorgan vorgeformt, dem vorgeformten Material der Beschichtung (26) das erweichte Kernmaterial zugeführt wird, und anschließend durch ein weiteres Formorgan eine allseits geschlossene Form zur Bildung des Führungsmittels (12) gebildet wird.

15. Verfahren nach einem der vorhergehenden Ansprüche, **dadurch gekennzeichnet**, daß nach der Fertigstellung des Führungsmittels (12) dieses mit einem separat insbesondere gleichlaufend bzw. synchron hergestellten Zugmittel (11) verbunden wird, und zwar vorzugsweise kontinuierlich, wobei die Verbindung zwischen dem Führungsmittel (12) und dem Zugmittel (11) an einer unbeschichteten Oberseite (24) des Führungsmittels (12) erfolgt.

16. Verfahren nach einem der vorhergehenden Ansprüche, **dadurch gekennzeichnet**, dass das Zugmittel (11) mit einer längsgerichteten Nut (Längsnut 20) versehen wird, in die ein Teil des Führungsmittels (12) eingesetzt und mit dem Zugmittel (11) verbunden wird, vorzugsweise durch Kleben, Vulkanisieren oder dergleichen.
